# EUROPEAN PATENT SPECIFICATION

(11) **EP 0 773 123 B1**
(45) Date of publication and mention of the grant of the patent: **06.03.2002**
(21) Application number: 96117666.6
(22) Date of filing: 05.11.1996
(51) Int. Cl.: B60H 1/22, F24H 3/04, B60H 1/00

(54) **Apparatus for treating an air stream intended to be introduced into the passenger compartment of a vehicle**
Vorrichtung zur Behandlung eines einem Fahrzeuginnenraumes zugeführten Luftstromes
Dispositif de traitement d'air destiné à être introduit dans l'habitacle d'un véhicule

(30) Priority: 07.11.1995 IT TO950897
(43) Date of publication of application: 14.05.1997
(73) Proprietor: DENSO THERMAL SYSTEMS S.p.A., 10046 Poirino (Torino) (IT)
(72) Inventor: Bellocchio, Angelo, 20138 Milano (IT)
(74) Representative: Quinterno, Giuseppe

(56) References cited:
- EP-A- 0 573 265
- FR-A- 2 031 684
- GB-A- 2 261 351
- US-A- 5 206 476
- US-A- 5 239 163

## Description

The present invention relates to apparatus for treating a stream of air intended to be introduced into the passenger compartment of a vehicle of the kind defined in the preamble of claim 1.

Air treatment apparatus for vehicles can be divided into heating systems and air conditioning/climate control systems, according to whether or not they have an evaporator assembly or the like for cooling or dehumidifying the air stream.

More specifically, the invention relates to treatment apparatus having an electric heating system. In the prior art, the treatment apparatus includes a duct for conveying the air stream, which extends from an inlet to an air stream distribution unit inside the vehicle. A fan unit, a heater unit and possibly an evaporator unit are arranged in the conveyor duct. The heater unit generally takes the form of a finned heating body through which the air stream to be heated passes.

An apparatus of the initially defined kind is disclosed in US-A-5 206 476. This prior apparatus includes a main heating unit and a supplementary heating unit. The main heating unit is a conventional heater core through which engine coolant circulates during vehicle operation. The supplementary heating unit comprises an air duct outlet portion made of an electrically conductive polymer material, preferably a PTC (positive temperature coefficient) material, for generating heat upon reception of electric power. The supplementary heating unit does not replace the function of the heater core, but only supplements it during the initial period of running and thereafter ceases operation.

EP-A-0 573 265 discloses a resistor assembly for a motor controller for an automotive fan including a plurality of thick film resistors carried by a quite small ceramic support base placed in an outlet duct of a fan. The resistor assembly is intended merely for controlling the speed of the fan motor and has no actual capability of operating as the heater unit in an apparatus for treating air to be introduced into a vehicle's passenger compartment.

The object of the present invention is to provide an improved apparatus of the initially defined kind. According to the present invention, this object is achieved by apparatus having the characteristics defined in Claim 1.

According to the invention, the heating means can be located on the wall of the conveyor duct surrounding the fan unit or, should this heat exchange surface not be sufficient, resistance heating elements can be arranged on further walls of the conveyor duct or even in the ducts that distribute the air stream inside the passenger compartment.

The heating resistors may consist of conductive tracks formed, for example, by printing or the like on a flexible support which can be secured by adhesive or welded to the walls of the conveyor duct. Alternatively, the resistors may be applied directly to the walls of the conveyor duct.

Further characteristics and advantages of the present invention will become apparent from the following detailed description, provided purely by way of non limitative example, with reference to the appended drawings, in which:
Figure 1 is a schematic side view of prior art air stream treatment apparatus;
Figure 2 is a schematic side view of apparatus according to the present invention; and
Figure 3 is a schematic perspective view of a heater element used in the apparatus according to the present invention.

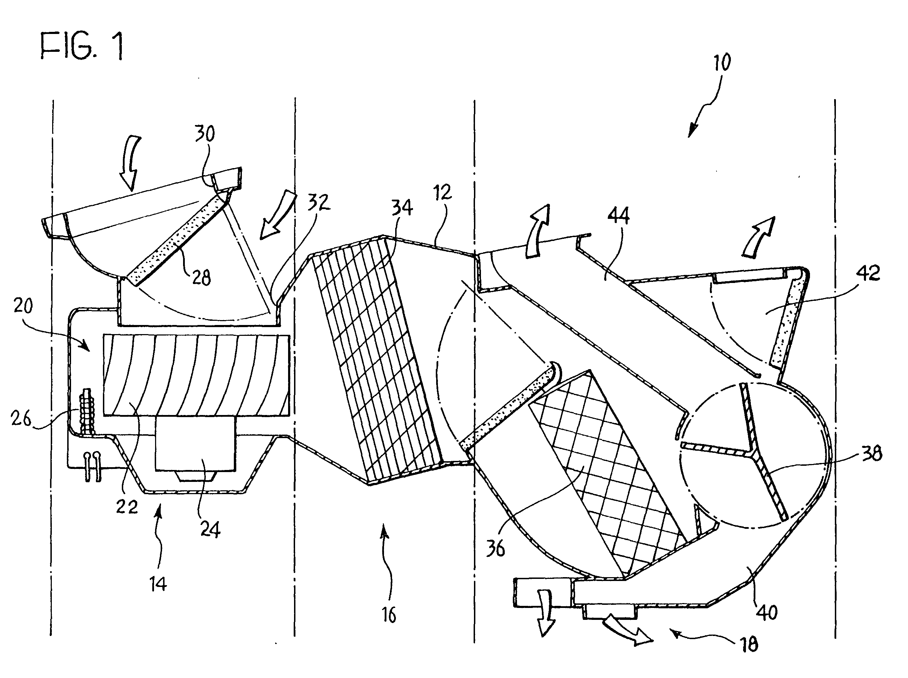

With reference first to Figure 1, apparatus for treating an air stream intended to be introduced into the passenger compartment of a vehicle is generally indicated 10. A duct for conveying the air stream, and constituting the casing of the apparatus, is indicated 12.

The apparatus 10 is essentially divided into three portions, indicated 14, 16 and 18. The first portion 14 includes a fan unit 20 constituted by an impeller 22 and an electric motor 24. The speed of rotation of the motor 24 is regulated by means of a rheostatic device 26. In dependence on the position of a control flap 28, the fan unit 20 draws in a stream of air from an aperture 30 communicating with the outside environment or from an aperture 32 communicating with the interior of the passenger compartment (recirculation option).

The second portion 16 houses an evaporator assembly 34, in cases where the apparatus 10 is designed for air conditioning or climate control of the air stream.

The third portion 18 of the treatment equipment 10 constitutes the heating and distribution assembly of the air stream. An electrical-resistance heater body 36 is housed in this portion, constituted typically by a plurality of resistors surrounded by a stack of fins through which the air stream to be heated must pass. The air-distribution assembly is arranged downstream of the heater body 36 and comprises a rotatable element 38 for dividing the treated air stream and a plurality of ducts 40, 42 and 44 which convey the air stream to various areas of the passenger compartment. In the example illustrated, the duct 40 conveys the air stream to the floor of the passenger compartment, the duct 42 feeds centrally-positioned outlet nozzles while the duct 44 conveys the air stream to the bottom of the windscreen.

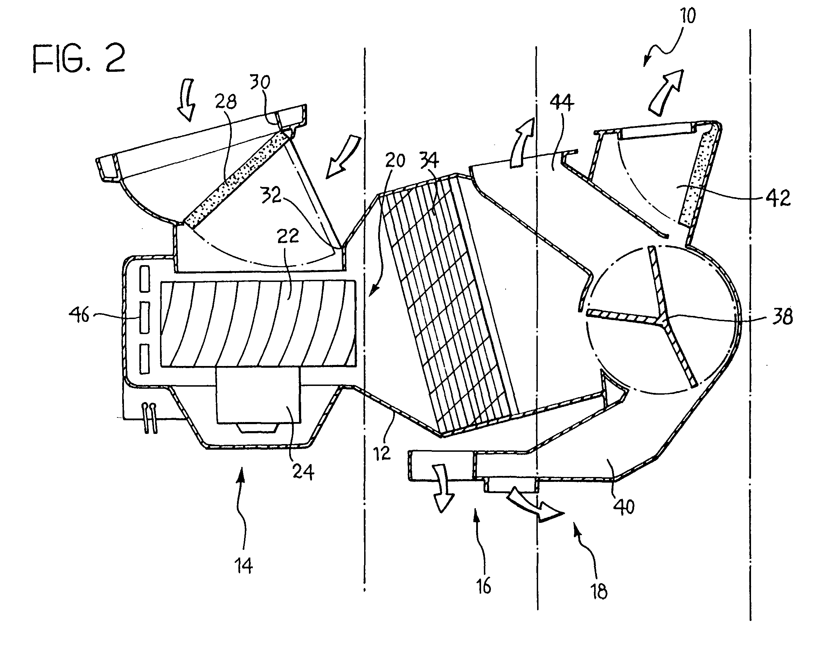

Figure 2 schematically illustrates treatment equipment according to the present invention. In this drawing, elements corresponding to those described above are indicated by the same reference numbers. In the equipment of the invention, the finned heater body indicated 36 in Figure 1 has been omitted and replaced by heating means distributed on predetermined portions of the inner surface of the conveyor duct 12. In Figure 2 these distributed heating elements are indicated 46.

In the arrangement according to the invention, the air stream is thus heated by heating means positioned directly on the surfaces conveying the air stream, while in the prior art arrangement of figure 1, the air stream was heated by passing it through a finned body.

This different system for heating the air stream makes it possible to eliminate the portion of the apparatus which was originally intended to house the finned heater body. This consequently leads to a considerable reduction in the space taken by the treatment apparatus 10 as well as of its weight and cost. The arrangement of the invention also makes it possible considerably to simplify the assembly procedure of the treatment apparatus.

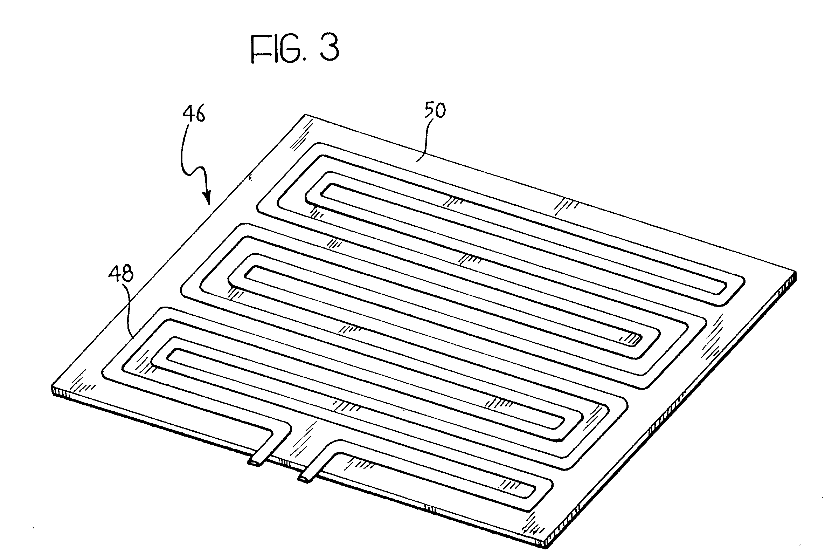

Figure 3 illustrates, by way of example, a possible embodiment of the wall-mounted heating means usable in equipment according to the invention. The heating element indicated 46 in Figure 3 is essentially constituted by a conductive track 48 applied, for example, by means of a printing process in itself known, onto a preferably flexible support sheet 50.

In Figure 3, the conductive track 48 which constitutes the resistive part of the heating element is serpentine but a resistive track of any other shape may be suitable. The face of the support 50 opposite that carrying the resistor track 48 may be adhesive so that the heating element 46 can be adhered to the inner surface of the conveyor duct 12. The support 50 could be fixed in any other way, for example by welding. Alternatively, the resistive tracks constituting the heating elements 46 could be applied directly to the inner wall of the conveyor duct 12.

The heating elements may be arranged on the portions of the conveyor duct 12 which surround the impeller 22 of the fan unit 20 or, if this arrangement does not give a sufficiently large heating surface, heater elements could be fitted to other portions of the conveyor duct 12 or on the walls of the ducts 40, 42, 44 which distribute the air stream within the passenger compartment of the vehicle.

In the arrangement according to the invention, the heating elements 46 are also used to regulate the speed of the electric motor 24. To this end, it is sufficient to insert one or more of the heating elements 46 into a circuit for regulating the supply voltage of the electric motor 24.

The heating elements 46 can be supplied by the battery fitted in the vehicle or by an alternator or a dynamo specifically provided for this heating function. Alternatively, power may be supplied via an inverter, from an external power supply or by photovoltaic cells.

The heating elements may be protected by means of thermal and/or current-sensitive switches, or may be of the self-protecting PTC type.

## Claims

1. Apparatus for the treatment of a stream of air intended to be introduced into the passenger compartment of a vehicle, including an air conveyor duct (12) with arranged in it an electric fan assembly (20) and means for heating the air stream including at least one electrical resistor (46), wherein the said heating means (46) are distributed along the walls of the conveyor duct (12);
**characterised in that** at least one of the heating resistors (46) forms part of a circuit for regulating the speed of rotation of the fan assembly (20).

2. Apparatus according to Claim 1, **characterised in that** the electrical heating means include at least one conductive track (48) formed on at least one support sheet (50) applied to a predetermined portion of the wall of the conveyor duct (12).

3. Apparatus according to Claim 2, **characterised in that** the conductive track (48) is formed by printing or like process onto a flexible support (50) which is secured by adhesive or welded to the wall of the conveyor duct (12).

4. Apparatus according to Claim 1, **characterised in that** the electrical heating means include at least one conductive track formed directly on a predetermined portion of the wall of the conveyor duct (12).

## Patentansprüche

1. Vorrichtung zur Behandlung eines Luftstroms, der dazu bestimmt ist, in den Fahrgastraum eines Fahrzeugs eingeleitet zu werden, einschließend eine Luftförderleitung (12), in der eine Elektrogebläse-Baugruppe (20) und Einrichtungen zum Erwärmen des Luftstroms einschließlich mindestens eines elektrischen Widerstands (46) angeordnet sind, wobei die Heizeinrichtungen (46) entlang der Wände der Förderleitung (12) verteilt sind, **dadurch gekennzeichnet, dass** mindestens einer der Heizwiderstände (46) Teil eines Kreislaufs zum Regeln der Rotationsgeschwindigkeit der Gebläse-Baugruppe (20) ist.

2. Vorrichtung nach Anspruch 1, **dadurch gekennzeichnet, dass** die elektrischen Heizeinrichtungen mindestens eine Leitspur (48) einschließen, die auf mindestens einer Trägerplatte (50) gebildet ist, die auf einem vorbestimmten Teil der Wand der Förderleitung (12) aufgebracht ist.

3. Vorrichtung nach Anspruch 2, **dadurch gekennzeichnet, dass** die Leitspur (48) durch Drucken oder ein gleichartiges Verfahren auf einen flexiblen Träger (50) gebildet ist, der durch ein Haftmittel an der Wand der Förderleitung (12) befestigt oder daran angeschweißt ist.

4. Vorrichtung nach Anspruch 1, **dadurch gekennzeichnet, dass** die elektrischen Heizeinrichtungen mindestens eine Leitspur einschließen, die direkt auf einem vorbestimmten Teil der Wand der Förderleitung (12) gebildet ist.

## Revendications

1. Appareil de traitement d'un courant d'air destiné à être introduit dans le compartiment des passagers d'un véhicule, comprenant un conduit de transport d'air (12) dans lequel est placé un ensemble à ventilateur électrique (20), et un dispositif de chauffage du courant d'air comprenant au moins une résistance électrique (46), dans lequel le dispositif de chauffage (46) est distribué le long des parois du conduit de transport (12),
**caractérisé en ce que** l'une au moins des résistances de chauffage (46) fait partie d'un circuit de régulation de la vitesse de rotation de l'ensemble à ventilateur (20).

2. Appareil selon la revendication 1, **caractérisé en ce que** le dispositif de chauffage électrique comprend au moins une voie conductrice (48) formée sur au moins une feuille de support (50) appliquée sur une partie prédéterminée de la paroi du conduit de transport (12).

3. Appareil selon la revendication 2, **caractérisé en ce que** la voie conductrice (48) est formée par une impression ou une opération analogue sur un support souple (50) qui est fixé par collage ou soudage à la paroi du conduit de transport (12).

4. Appareil selon la revendication 1, **caractérisé en ce que** le dispositif de chauffage électrique comporte au moins une voie conductrice formée directement sur une partie prédéterminée de la paroi du conduit de transport (12).
